# EUROPÄISCHE PATENTANMELDUNG

(11) **EP 1 114 934 A2**
(43) Veröffentlichungstag der Anmeldung: **11.07.2001**
(21) Anmeldenummer: 00125736.9
(22) Anmeldetag: 24.11.2000
(51) Int. Cl.: F15B 15/14, B23G 1/46

(54) **Pneumatikzylinder zum Schalten eines Werkzeugantriebsgetriebes**

(30) Priorität: 05.01.2000 DE 10000173
(71) Anmelder: Emuge-Werk Richard Glimpel Fabrik für Präzisionswerkzeuge (vormals Moschkau & Glimpel), D-91207 Lauf (DE)
(72) Erfinder: Watzke, Rüdiger, 91233 Neunkirchen a.S. (DE)
(74) Vertreter: Matschkur, Peter

(57) **Zusammenfassung**

Pneumatikzylinder (6) zum Schalten eines Werkzeugantriebs-Getriebes (5) mittels einer radial vom Kolben abstehenden Schaltgabel (10), insbesondere eines Gewindeschneidapparates mit Drehrichtungsumkehr, bei dem die Drehrichtung eines im Spannkopf (3) einer gegen eine Längenausgleichsfeder (4) ausziehbaren Spindel (1) gehalterten Bohrers nach Erreichen einer vorgegebenen Bohrtiefe umgeschaltet wird, wobei der Kolben (7) des Pneumatikzylinders (6) an beiden Stirnenden (13,14) mit Ansätzen (15,16) versehen ist, die mittels Kugelführungen (17,18) in Verlängerungen (19,20) des Zylinderraums (21) geführt sind.

## Beschreibung

Die Erfindung bezieht sich auf einen Pneumatikzylinder zum Schalten eines Werkzeugantriebs-Getriebes mittels einer radial vom Kolben abstehenden Schaltgabel, insbesondere zum Schalten eines Gewindeschneidapparates mit Drehrichtungsumkehr, bei dem die Drehrichtung eines im Spannkopf einer gegen eine Längenausgleichsfeder ausziehbaren Spindel gehalterten Bohrers nach Erreichen einer vorgegebenen Bohrtiefe umgeschaltet wird.

Ein derartiger als Reversierfutter ausgebildeter Gewindeschneidapparat ist bereits in einer älteren Anmeldung vorgeschlagen worden, wobei das Problem eines derartigen Pneumatikzylinders mit einseitig abstehender Schaltgabel in der unsymmetrischen eine Verkippung des Kolbens im Zylinder bewirkenden Belastung liegt. Insbesondere bei angestrebten hohen Schaltgeschwindigkeiten ergeben sich doch recht große Verstellkräfte, die entsprechend eine stärkere Verkippung zur Folge haben und dies wiederum sorgt für eine starke Bremswirkung. Die erzielbare Schaltgeschwindigkeit wird auf diese Art und Weise zwangsläufig sehr stark beeinträchtigt.

Der Erfindung liegt daher die Aufgabe zugrunde einen Pneumatikzylinder zum Schalten eines Werkzeugantriebs-Getriebes der eingangs genannten Art so auszugestalten, dass eine leichtgängigere Kolbenführung und damit ein schnelleres Beschleunigen der Kolben beim Schaltvorgang erzielt werden kann.

Zur Lösung dieser Aufgabe ist erfindungsgemäß vorgesehen, dass der Kolben des Pneumatikzylinders an beiden Stirnenden mit Ansätzen versehen ist, die mittels Kugelführungen in Verlängerungen des Zylinderraums geführt sind. Diese erfindungsgemäße Kugelführung des Kolbens an beiden Stirnenden, die ersichtlich jede Verkippungsgefahr und eine daraus resultierende Bremswirkung sicher ausschaltet, führt darüber hinaus auch zu einer besonders leichtgängigen Verschiebbarkeit, was wiederum die angestrebte leichtgängige Kolbenführung und die schnellere Beschleunigung des Kolbens beim Schaltvorgang begünstigt.

Der Kolben, der vorzugsweise mittels O-Ringen im Zylinderraum abgedichtet ist, braucht bei der erfindungsgemäßen Ausgestaltung lediglich noch die Dichtfunktion zwischen den beiden wahlweise mit Druckmittel beaufschlagbaren Kammern zu übernehmen, hat aber keine Führungsfunktion mehr wie bei üblichen Hydraulikzylindern.

Mit besonderem Vorteil kann die Ausgestaltung derart erfolgen, dass der Pneumatikzylinder zweikammerig mit Druckmittelein- und -auslässen auf beiden Stirnseiten des Kolbens ausgebildet ist und dass die Schaltgabel zum Schalten des Werkzeugantriebs-Getriebes radial mittig vom Kolben abstehend zwischen den O-Ringen eine durchgehende Axialausnehmung der Zylinderwand durchsetzt.

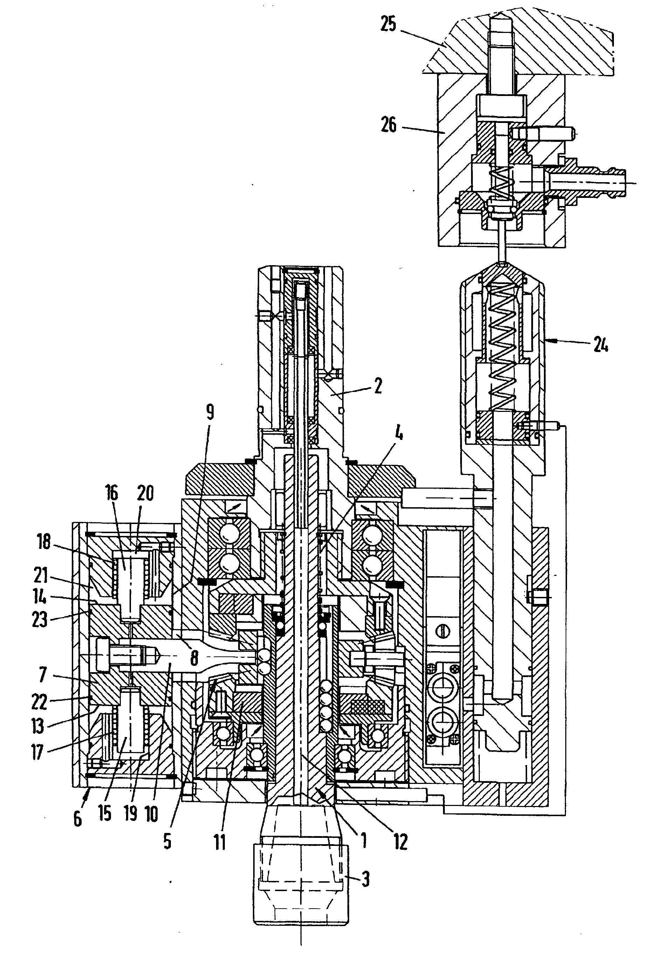

Weitere Vorteile, Merkmale und Einzelheiten der Erfindung ergeben sich aus der nachfolgenden Beschreibung eines Ausführungsbeispiels sowie anhand der Zeichnung, die einen Schnitt durch ein Reversierfutter mit Druckausgleichsleitungen darstellt, bei dem ein Planetengetriebe mit einem erfindungsgemäßen Pneumatikzylinder zum Umschalten der Drehrichtung des Bohrers nach Erreichen einer vorgegebenen Bohrtiefe versehen ist.

Der gezeigte als Reversierfutter ausgebildete Gewindeschneidapparat besitzt eine ausziehbare Spindel 1, die mit dem Schaft 2 zur Aufnahme in die Werkzeugmaschine in getrieblicher Verbindung steht. An der ausziehbaren Spindel ist vorne der Spannkopf 3 für einen nicht gezeigten Gewindebohrer befestigt. Beim Erreichen der Gewindetiefe wird das gezeigte Reversierfutter über die gesteuerte Vorschubeinheit der Werkzeugmaschine zurückgefahren, wobei der Bohrer dabei gegen die Wirkung der Längenausgleichsfeder 4 ausgezogen wird. Zum Herausdrehen des Gewindebohrers - die Werkzeugmaschine dreht sich ständig in der gleichen Drehrichtung weiter - muss eine Drehrichtungsumkehr über das Planetengetriebe 5 bewerkstelligt werden, die erfindungsgemäß durch den erfindungsgemäßen Pneumatikzylinder 6 erfolgt, dessen Kolben 7 mit einer radial abstehenden, eine Längsausnehmung 8 der Pneumatikzylinderwand 9 durchsetzenden Schaltgabel 10 versehen ist, der das Umschaltglied 11 für das Planetengetriebe 5 in Axialrichtung verschiebt.

Um ein Verkanten des Kolbens 7 aufgrund der einseitig wirkenden Belastung durch die Schaltgabel und das Umschaltglied 11 zu vermeiden, sind an beiden Stirnenden 13 und 14 des Kolbens 7 zylindrische Ansätze 15 und 16 angeordnet, die mittels Kugelführungen 17, 18 in zylindrischen Verlängerungen 19, 20 des Zylinderraums 21 des Pneumatikzylinders 6 geführt sind. Durch diese Kugellagerführung auf beiden Enden ist jegliche Verkippungsgefahr bei Bewegen des Kolbens 7 aufgrund der Schaltkräfte sicher verhindert und man erhält eine besonders leichtgängige Kolbenführung und kann ein schnelleres Beschleunigen des Kolbens beim Schaltvorgang erzielen. Die schnellere Beschleunigung und damit die raschere Umschaltung verbessert die Genauigkeit der automatischen Bohrtiefenbegrenzung ganz beträchtlich. Der Kolben 7 ist durch beabstandete O-Ringe 22 und 23 im Pneumatikzylinder 6 abgedichtet, wobei die Abstände so gewählt sind, dass die O-Ringe 22 und 23 stets oberhalb bzw. unterhalb der Durchbrechung 8 der Zylinderwand 9 liegen, so dass die beidseits des Kolbens 7 liegenden Kammern, deren Ein- und Auslässe für das Druckmittel, vorzugsweise Druckluft, im gezeigten Schnitt nicht erkennbar sind, stets abgedichtet bleiben.

Die in der Figur rechts zu erkennende einen Arretierbolzen 24 und einen am Maschinenrahmen 25 befestigten Arretierblock 26 umfassende Zuführeinrichtung für Luft und Strom zum Gewindeschneidapparat soll, da sie nicht Gegenstand der vorliegenden Patentanmeldung ist, an dieser Stelle nicht im Einzelnen näher beschrieben werden.

## Patentansprüche

1. Pneumatikzylinder zum Schalten eines Werkzeugantriebs-Getriebes mittels einer radial vom Kolben abstehenden Schaltgabel, insbesondere eines Gewindeschneidapparates mit Drehrichtungsumkehr, bei dem die Drehrichtung eines im Spannkopf einer gegen eine Längenausgleichsfeder ausziehbaren Spindel gehalterten Bohrers nach Erreichen einer vorgegebenen Bohrtiefe umgeschaltet wird, dadurch gekennzeichnet, dass der Kolben (7) des Pneumatikzylinders (6) an beiden Stirnenden (13, 14) mit Ansätzen (15, 16) versehen ist, die mittels Kugelführungen (17, 18) in Verlängerungen (19, 20) des Zylinderraums (21) geführt sind.

2. Pneumatikzylinder nach Anspruch 1, dadurch gekennzeichnet, dass der Kolben (7) mittels O-Ringen (22, 23) im Zylinderraum (21) abgedichtet ist.

3. Pneumatikzylinder nach Anspruch 1 oder 2, dadurch gekennzeichnet, dass er zweikammerig mit Druckmittelein- und -auslässen auf beiden Stirnseiten (13, 14) des Kolbens (7) ausgebildet ist und dass die Schaltgabel (10) zum Schalten des Werkzeugantriebs-Getriebes mittig radial vom Kolben (7) abstehend zwischen den O-Ringen (22, 23) eine durchgehende Axialausnehmung (8) der Zylinderwand (9) durchsetzt.
